# EUROPÄISCHE PATENTSCHRIFT

(11) **EP 2 844 455 B1**
(45) Veröffentlichungstag und Bekanntmachung des Hinweises auf die Patenterteilung: **27.09.2017**
(21) Anmeldenummer: 13709836.4
(22) Anmeldetag: 05.03.2013
(51) Int. Cl.: B29C 70/38

(54) **QUERABLEGEN VON FASERN**
METHOD FOR THE TRANSVERSAL PLACEMENT OF FIBERS
APPLICATION TRANSVERSALE DE FIBRES

(30) Priorität: 05.03.2012 DE 102012203395
(43) Veröffentlichungstag der Anmeldung: 11.03.2015
(73) Patentinhaber: Audi AG, 85045 Ingolstadt (DE)
(72) Erfinder: UFER, Jaromir, 80807 München (DE); GÖTTINGER, Marco, 81543 München (DE)
(74) Vertreter: Neuhausen, Marc-Alexander
(86) Internationale Anmeldenummer: PCT/EP2013/054319
(87) Internationale Veröffentlichungsnummer: WO 2013/131870

(56) Entgegenhaltungen:
- EP-A2- 0 276 169
- WO-A2-2010/048351
- FR-A1- 2 256 017
- US-A- 3 150 026
- US-A1- 2011 203 737

## Beschreibung

Die vorliegende Erfindung betrifft ein Verfahren zum Ablegen von 1-/2-dim. Fasergebilden zu einem 2-/3-dim. Fasergebilde, insbesondere ausgebildet als ein Faser-Kunststoff-Verbund (FKV) oder als ein FKV-Halbzeug, mit einer Produktionsmaschine, umfassend zumindest eine Ablegevorrichtung und zumindest einen Faserträger, wobei die Ablegevorrichtung die 1-/2-dim. Fasergebilde auf den Faserträger ablegt. Des Weiteren betrifft die Erfindung eine Produktionsmaschine zur Herstellung eines 2-/3-dim. Fasergebildes, insbesondere als Faser-Kunststoff-Verbund oder FKV-Halbzeug ausgebildet, gemäß dem vorhergehend genannten Verfahren.

Bei der Herstellung eines Faser-Kunststoff-Verbundes werden Verfahren eingesetzt wie beispielsweise das Automated Fiber Placement (AFP) oder das Automated Tape Laying (ATL). Bei diesen Verfahren werden die 1-/2-dim. Fasergebilde in Form von unidirektionalen Bändern auf eine Oberfläche abgelegt. Die Ablegerichtung der 1-/2-dim. Fasergebilde entspricht bei derartigen Verfahren der Fasergebilde-Hauptachsrichtung 1-/2-dim. Fasergebilde. Dabei kann unter Umständen eine Vorspannung erforderlich sein, um die Fasern während des Ablegens gestreckt platzieren zu können. Der zuvor beschriebene Prozess des Ablegens kann jedoch bei 3-dim. Geometrien des Faserträgers, auf den die 1-/2-dim. Fasergebilde abgelegt werden, an seine Grenzen stoßen, da abhängig von der Faser-Bandbreite bzw. Tape-Bandbreite und dem Durchmesser der Anpressrolle das Ablegen der 1-/2-dim. Fasergebilde auf gekrümmten Flächen nur bedingt möglich ist.

WO 2010/048351 A2 offenbart ein Verfahren nach dem Oberbegriff des Anspruchs 1 zum Ablegen von 1/2-dim. Fasergebilden zu einem 2-/3-dim. Fasergebilde und eine Produktionsmaschine nach dem Oberbegriff des Anspruchs 10 zur Herstellung eines 2-/3-dim. Fasergebildes aus 1-/2- dim. Fasergebilden.

Die vorliegende Erfindung beschäftigt sich mit der Aufgabe, für ein Verfahren zum Ablegen von 1-/2-dim. Fasergebilden und für eine dieses Verfahren anwendende Produktionsmaschine eine verbesserte oder zumindest eine alternative Ausführungsform anzugeben, die sich insbesondere durch eine breitere Anwendbarkeit beispielsweise auch bei gekrümmten Flächen auszeichnet.

In einem Aspekt der Erfindung wird somit ein Verfahren nach Anspruch 1 zum Ablegen von 1-/2-dim. Fasergebilden zu einem 2-/3-dim. Fasergebilde, insbesondere ausgebildet als ein Faser-Kunststoff-Verbund oder FKV-Halbzeug, und eine Produktionsmaschine nach Anspruch 10 vorgeschlagen. Dabei können die Fasergebilde-Hauptachsrichtungen der abgelegten 1-/2-dim. Fasergebilde zur Ablegerichtung einen Winkel α>0° einnehmen. Es können die Fasergebilde-Hauptachsrichtungen der abgelegten 1-/2-dim. Fasergebilde zur Ablegerichtung auch einen Winkel α>20°, insbesondere α>40°, gegebenenfalls α>60° und beispielsweise α>70° einnehmen. Dabei kann der Winkel α einen Maximalwert von 90° annehmen. Somit wird in anderen Worten hinsichtlich des Winkels α immer ein spitzer Winkel oder der rechte Winkel betrachtet.

Bei herkömmlichem Ablegen von 1-/2-dim. Fasergebilden setzt beispielsweise der Fixierpunkt unterhalb der Pressvorrichtung und die Materialführung der Ablegevorrichtung eine minimale Faserlänge voraus, die üblicherweise 6 bis 30 cm betragen kann. Aufgrund dieser minimalen Faserlänge können insbesondere bei kleinen Bauteilen lokale Verstärkungen innerhalb des Bauteiles nicht realisiert werden. Zudem kann ein erhöhter Verschnitt außerhalb des Bauteils aufgrund der minimalen Faserlänge notwendig sein. Vorteilhaft können durch ein derartiges Querablegen von 1-/2-dim. Fasergebilden, wobei die Fasergebilde-Hauptachsrichtungen der 1-/2-dim. Fasergebilde zur Ablegerichtung einen Winkel α > 0° einnehmen, 1-/2-dim. Fasergebilde mit einer signifikant reduzierten, minimalen Faserlänge bzw. Fasergebildelänge verwendet werden. Aufgrund der kleinen Faserlängen bzw. Fasergebildelängen kann man eine größere Flexibilität bei der Einbringung von lokalen Verstärkungen und eine Verschnittreduzierung erreichen. Dies wird beispielsweise bei kleinen Automotive-Strukturen im Vergleich zu den großen Strukturen in der Luft- und Raumfahrt immer öfter gefordert, insbesondere um die Herstellungskosten zu reduzieren.

Zudem ist bei einem herkömmlichen Ablegen der 1-/2-dim. Fasergebilde in Fasergebilde-Hauptachsrichtung aufgrund der Steifigkeit der Fasern in Längsrichtung meist keine definierte Materialführung am Faserende, also zwischen der Anpressvorrichtung und der Drapiervorrichtung, gegeben. Dadurch ist an gerade dieser Position gegebenenfalls kein gezielter Wärmeenergieeintrag möglich, der für eine Fixierung notwendig ist. Dieser bei dem herkömmlichen Ablegen von 1-/2-dim. Fasergebilden auftretende Nachteil kann durch ein Querablegen der 1-/2-dim. Fasergebilde überwunden werden, sodass vorteilhaft auch am Faserende ein notwendiger, gezielter Wärmeenergieeintrag möglich ist und damit eine Konsolidierung bzw. Fixierung der 1-/2-dim. Fasergebilde auch an den Faserenden sichergestellt und reproduziert werden kann.

Unter einem 1-dim. Fasergebilde ist ein Fasergebilde zu verstehen, bei dem die Erstreckung des Fasergebildes in Richtung der Breite und der Höhe gegenüber der Erstreckung des Fasergebildes in Richtung der Länge vernachlässigbar ist. In anderen Worten ist die Erstreckung des Fasergebildes in Richtung der Länge vorherrschend und prägend. Dabei können beide Richtungen Breite oder Höhe im Wesentlichen eine gleiche Erstreckung aufweisen oder eine der beiden Richtungen kann in ihrer Erstreckung gegenüber der anderen signifikant vergrößert sein. Von dem Begriff 1-dim. Fasergebilde sind Fasern, Endlosfasern, Garne, Faserbündel, Faserstränge, Filamente, Filamentbündel, Rovings oder Mischformen umfasst.

Unter einem 2-dim. Fasergebilde ist ein Fasergebilde zu verstehen, bei dem die Erstreckung des Fasergebildes in Richtung der Höhe gegenüber der Erstreckung des Fasergebildes in Richtung der Länge und der Breite vernachlässigbar ist. In anderen Worten ist die Erstreckung des Fasergebildes in Richtung der Länge und der Breite vorherrschend und prägend. Dabei können beide Richtungen Breite oder Länge im Wesentlichen eine gleiche Erstreckung aufweisen oder eine der beiden Richtungen kann in ihrer Erstreckung gegenüber der anderen signifikant vergrößert sein. Von dem Begriff 2-dim. Fasergebilde sind Gewebe, Gestricke, Gewirke, Vliesstoffe, unidirektionale abgelegte Faserschichten, Multiaxial-Gelege, Matten, Maschenwaren, Abstandsgewebe, Geflechtschläuche, Stickereien, Nähzeuge, Abreißgewebe oder Mischfomen umfasst.

Die einzelnen 1-/2-dim. Fasergebilde, aus denen das 2-/3-dim. Fasergebilde ausgebildet wird, können auch in Form eines Stranges, beispielsweise durch zumindest bereichweise aufgebrachtes Bindemittel oder Matrixmaterial, miteinander verbunden sein. Dabei werden die einzelnen Strangabschnitte des Stranges durch die 1-/2-dim. Fasergebilde aufgebaut, wobei die Fasergebilde-Hauptachsrichtungen der Strangabschnitte bzw. 1-/2-dimensionalen Fasergebilde unter einem Winkel >0° zur Längsrichtung des Stranges angeordnet sind. Dabei wird als Winkel ein spitzer Winkel oder der rechte Winkel vermessen.

Unter einem 3-dim. Fasergebilde ist ein Fasergebilde zu verstehen, dessen Erstreckung in Richtung der Länge, der Breite und der Höhe gegenüber keiner der Richtungen vorherrschend ist. Dabei können alle Richtungen im Wesentlichen eine gleiche Erstreckung aufweisen oder eine oder zwei der drei Richtungen kann oder können in ihrer Erstreckung gegenüber den anderen oder der anderen signifikant vergrößert sein. Von dem Begriff 3-dim. Fasergebilde sind im Wesentlichen mehrere aufeinander geschichtete 2-dim. Fasergebilde zu verstehen. Dabei können die 2-dim. Fasergebilde unterschiedlich ausgebildet sein. So ist es denkbar, dass beispielsweise eine unidirektionale Faserschicht von einem Vliesstoff als nächste Schicht gefolgt wird während ein Gewebe das 3-dim. Fasergebilde abschließen kann. Es können aber auch ausschließlich unidirektionale 2-dimensionale Fasergebilde zum Aufbau eines 3-dim. Fasergebildes verwendet werden. Dabei können die unidirektionalen 2-dim. Fasergebilde gleich orientiert oder unterschiedlich orientiert hinsichtlich ihrer Richtung sein. In Letzterem Fall liegt ein Multiaxial-Gelege vor.

Ein Faser-Kunststoff-Verbund besteht im Wesentlichen aus zumindest einem 1-/2- oder 3-dim. Fasergebilde, das in eine Kunststoff-Matrix eingebettet ist. Dabei wird das zumindest eine 1-/2- oder 3-dim. Fasergebilde von der Kunststoff-Matrix umgeben, die durch Adhäsiv- oder Kohäsivkräfte an das zumindest eine 1-/2- oder 3-dim. Fasergebilde gebunden ist. Als Materialien für Fasergebilde können Glasfasern, Kohlenstofffasern, Aramidfasern, PBO-Fasern, Polyethylenfasern, Naturfasern, Basaltfasern, Quarzfasern, Aluminiumoxidfasern, Siliziumcarbidfasern oder Mischformen zum Einsatz kommen. Als Materialien für die Matrix können Duroplaste, Thermoplaste, Elastomere, sowie Füllstoffe, gesättigte oder ungesättigte Polyesterharze, Epoxidharze, Vinylesterharze oder Mischformen zum Einsatz kommen.

Unter einem FKV-Halbzeug ist ein 2-/3-dimensionales Fasergebilde zu verstehen, dass als Preform, Vorform, Vorformling, Prepreg oder Mischform für einen Faser-Kunststoff-Verbund fungiert. Aus dem FKV-Halbzeug kann durch Applikation der Matrix bzw. des Matrixmaterials in oder auf das FKV-Halbzeug und durch beispielsweise nachfolgendes Verpressen der Faser-Kunststoff-Verbund hergestellt werden. Dabei kann das FKV-Halbzeug Kunststoffe aufweisen, die als Binder, Bindemittel, Imprägnierungsmittel, Haftvermittler oder Mischformen wirken. Mittels beispielsweise dieser Kunststoffe kann das FKV-Halbzeug in Form gehalten werden, so dass ein Verschieben der Fasergebilde zueinander beispielsweise bei Transport weitestgehend vermieden werden kann. Es ist auch denkbar, dass das FKV-Halbzeug als Faser-Matrix-Halbzeug ausgebildet ist. In diesem Falle ist das 2-/3-dimensionales Fasergebilde mit Matrixmaterial imprägniert, wobei das Matrixmaterial zumindest teilweise polymerisiert ist. Dabei hat das Matrixmaterial in dem Faser-Matrix-Halbzeug eine fixierende Funktion, so dass ein Verschieben der Fasergebilde bzw. Faserschichten zueinander gegebenenfalls bei der Weiterverarbeitung zumindest verringert ist.

Unter einer Ablegevorrichtung ist eine Vorrichtung zu verstehen, die die 1-/2-dim. Fasergebilde auf einen Faserträger ablegt, wobei der Faserträger beispielsweise einen Werkzeugtisch, ein Förderband, ein Endlossieb, einen Endlosfilz, eine Werkzeughälfte eines Presswerkzeuges, eine Walze, besaugt oder elektrostatisch aufladbar oder dergleichen darstellen kann. Der Faserträger kann dabei jede beliebige Maschinenkomponente sein, auf den die 1-/2-dim. Fasergebilde mittels der Ablegevorrichtung abgelegt werden. Die Ablegevorrichtung ist als ein besaugte Förderband ausgebildet. Unter der Ablegerichtung ist die Richtung zu verstehen, unter der die Ablegevorrichtung relativ zum Faserträger die 1-/2-dim. Fasergebilde auf dem Faserträger ablegt. Dabei kann sich die Ablegevorrichtung entlang des Faserträgers bewegen. Es ist aber auch denkbar, dass sich der Faserträger, beispielsweise ausgebildet als ein Förderband, bewegt, während die Ablegevorrichtung stationär ausgebildet ist. Oder es ist möglich, dass sowohl die Ablegevorrichtung als auch der Faserträger beweglich ausgebildet sind, wie beispielsweise im Falle von zwei Förderbändern, wobei das eine Förderband die 1-/2-dim. Fasergebilde auf das andere Förderband ablegt.

Unter einer Nahordnung versteht man ein derart geordnetes Ablegen der 1-/2-dim. Fasergebilde auf dem Faserträger, dass die unmittelbar und in näherer Nachbarschaft abgelegten 1-/2-dim. Fasergebilde zueinander gemäß einer Regel oder regelmäßig abgelegt sind. Ein derartig regelmäßiges Ablegen lässt eine Voraussage über die Position und/oder die Fasergebilde-Hauptachsrichtung einzelner 1-/2-dim. Fasergebilde in der unmittelbaren Nachbarschaft zu einem betrachteten 1-/2-dim. Fasergebilde zu. Sind beispielsweise die 1-/2-dim. Fasergebilde in einer Wirrlage abgelegt, beispielsweise als Filz oder dergleichen, liegt keine Nahordnung vor. Dabei können die einzelnen 1-/2-dim. Fasergebilde zwar eine Wirrlage aufweisen, zueinander weisen die abgelegten 1-/2-dim. Fasergebilde in dem 2-/3-dim. Fasergebilde jedoch eine Nahordnung auf.

Unter einer Fasergebilde-Hauptachsrichtung ist diejenige Richtung Länge, Breite, Höhe des 1-/2-dim. Fasergebildes zu verstehen, die in ihrer Erstreckung größer ist, als die verbleibenden anderen beiden Richtungen. Bei einem 1-dim. Fasergebilde ist somit die Länge die Fasergebilde-Hauptachsrichtung. Sind dabei die 1-/2-dim. Fasergebilde aus zumindest einer unidirektionalen Faserschicht ausgebildet, so kann dessen Fasergebilde-Hauptachsrichtung der Faserorientierung der einzelnen Fasern bzw. der einzelnen Filamente der Fasern entsprechen. Bei komplexer aufgebauten 1-/2-dim. Fasergebilden versteht man unter der Fasergebilde-Hauptachsrichtung nicht zwingend die Faserorientierung der einzelnen Fasern bzw. Filamente, aus denen das 1-/2-dim. Fasergebilde aufgebaut ist.

Die Fasergebilde-Hauptachsrichtung der abgelegten 1-/2-dim. Fasergebilde in dem 2-/3-dim. Fasergebilde ist zu der Ablegerichtung unter einem Winkel α>0° angeordnet. Dieser Winkel α kann für alle 1-/2-dim. Fasergebilde den gleichen Wert aufweisen. Wird beispielsweise die Ablegerichtung der Ablegevorrichtung während des Ablegens variiert, so können die Fasergebilde-Hauptachsrichtungen der abgelegten 1-/2-dim. Fasergebilde unter unterschiedlichen Winkeln α zur Ablegerichtung orientiert sein. Dabei können auch eine vorbestimmte Anzahl von 1-/2-dim. Fasergebilden parallel zur Ablegerichtung mit ihrer Fasergebilde-Hauptachsrichtung positioniert sein und somit unter einem Winkel α=0°. Jedoch sind auch in diesem Fall die Fasergebilde-Hauptachsrichtungen zumindest eines Anteils der 1-/2-dim. Fasergebilde unter einem Winkel von α>0° zur Ablegerichtung positioniert.

Vorteilhaft kann durch ein derartiges Querablegen die Qualität der Faser-Kunststoff-Verbunde bzw. der FKV-Halbzeuge unter anderem aufgrund der definierten Faserende-Fixierung verbessert werden. Zudem kann dadurch eine höhere Ablagerate erreicht werden und zudem ist ein gewünschtes Eigenschaftsprofil flexibler herstellbar.

Dabei versteht man unter Eigenschaftsprofil das Materialverhalten des fertigen Faser-Kunststoff-Verbundes wie beispielsweise ein Steifigkeitsprofil oder ein Festigkeitsprofil.

Des Weiteren können zusätzlich oder alternativ die 1-/2-dim. Fasergebilde spannungsfrei in Fasergebilde-Hauptachsrichtung auf dem Faserträger abgelegt werden.

Weiterhin ist die 1-/2-dim. Fasergebilde spannungsfrei in Ablegerichtung auf dem Faserträger abgelegt werden.

Dabei versteht man unter einem spannungsfreien Ablegen in Fasergebilde-Hauptachsrichtung und/oder Ablegerichtung ein Ablegen von 1-/2-dim. Fasergebilden derart, dass die 1-/2-dim. Fasergebilde während des Ablegens in Fasergebilde-Hauptachsrichtung und/oder Ablegerichtung nicht unter Spannung stehen. Demzufolge sind die 1-/2-dim. Fasergebilde während des Ablegens nicht vorgespannt, sondern werden beispielsweise ohne Ziehen an den Enden auf dem Faserträger abgelegt. Aufgrund der fehlenden Vorspannung kann nunmehr ein gestrecktes Ablegen der 1-/2-dim. Fasergebilde erreicht werden, ohne dass die 1-/2-dim. Fasergebilde entlang ihrer Fasergebilde-Hauptachsrichtung und/oder Ablegerichtung gespannt werden müssen. Auch kann vorteilhaft ein Abgleiten der abgelegten Lagen aufeinander und eine damit einhergehende unerwünschte Verschiebung von 1-/2-dim. Fasergebilden in benachbarten oder unteren Lagen beim Ablegen verhindert bzw. reduziert werden. Außerdem können im Vergleich zu einem vorgespannten Ablegen von 1-/2-dim. Fasergebilden höhere Ablageraten erreicht werden, da keine Zugkräfte wirken, die bei einer notwendigen Fixierung der 1-/2-dim. Fasergebilde zu Verschiebungen, Abrissen oder ungewollten Ablösungen von vorfixierten Lagen oder der 1-/2-dim. Fasergebilde untereinander führen können. Zudem kann bei einem spannungsfreien Ablegen der 1-/2-dim. Fasergebilde eine Reduzierung der Zugspannung auf tatsächlich 0 vorgenommen werden, was bei den herkömmlichen Verfahren, die mit Zugspannung arbeiten, nicht möglich ist, da zumindest eine minimale Zugspannung auf die 1-/2-dim. Fasergebilde wirken muss.

Des Weiteren können die 1-/2-dim. Fasergebilde vor und/oder während und/oder nach dem Ablegen mit einem Bindemittel oder Matrixmaterial derartig vorbehandelt werden, dass sie untereinander und/oder an/auf dem Faserträger haften.

Durch die Verwendung eines Bindemittels kann vorteilhaft ein Verschieben der 1-/2-dim. Fasergebilde oder sogar der unterschiedlichen Lagen zueinander verringert bzw. verhindert werden, sodass während dem Ablegen ein positionsgenaues Ablegen ohne ein darauffolgendes Verrutschen möglich ist. Demzufolge sind die einzelnen Faserschichten oder -lagen reproduzierbar in der gewünschten Positionierung und mit dem gewünschten Eigenschaftsprofil herstellbar. Als Bindemittel können dabei duroplastische oder thermoplastische Kunststoffe verwendet werden. Dabei kann als Bindemittel auch direkt Matrixmaterial verwendet werden.

Des Weiteren kann die Ablegevorrichtung in Ablegerichtung die 1-/2-dim. Fasergebilde auf dem Faserträger derart geordnet ablegen, dass die einzelnen 1-/2-dim. Fasergebilde zudem eine Fernordnung aufweisen.

Vorteilhaft können durch eine derartige Fernordnung FKV-Halbzeuge und Faser-Kunststoff-Verbunde erzeugt werden, die ein hochgradig exaktes Eigenschaftsprofil aufgrund der hohen Reproduzierbarkeit der Position und Fasergebilde-Hauptachsrichtung der 1-/2-dim. Fasergebilde aufweisen können. Dabei versteht man unter Fernordnung, wie schon vorhergehend bei der Nahordnung beschrieben, ein derart geordnetes Ablegen der 1-/2-dim. Fasergebilde, dass nicht nur in unmittelbarer Nachbarschaft eines jeweiligen 1-/2-dim. Fasergebildes die Ausrichtung und Positionierung eines weiteren 1-/2-dim. Fasergebildes vorausgesagt werden kann, sondern auch weiter entfernt ggf. sogar über Faserschichten bzw. -lagen hinweg. Somit kann im gesamten 2-/3-dim. Fasergebilde vorausgesagt werden, welche Position und Fasergebilde-Hauptachsrichtung ein weiteres 1-/2-dim. Fasergebilde zu dem ursprünglich betrachteten einnimmt. Dies jedoch unter Berücksichtigung von Ablegefehlern bzw. Fehlerstellen.

Des Weiteren kann der Faserträger eine erste Werkzeughälfte mit einem Oberflächenprofil aufweisen, das den mit dem Verfahren herstellbaren Faser-Kunststoff-Verbund oder das mit dem Verfahren herstellbare FKV-Halbzeug während eines Konsolidierungsvorganges profiliert.

Vorteilhaft kann durch eine erste Werkzeughälfte in einer Produktionsmaschine sowohl das Ablegen der 1-/2-dim. Fasergebilde als auch deren Konsolidierung bzw. Teilkonsolidierung zu einem Faser-Kunststoff-Verbund oder FKV-Halbzeug vorgenommen werden, was zudem den Produktionsprozess vereinfacht und die Produktionsgeschwindigkeit erhöht. Dabei versteht man unter einem Konsolidierungsvorgang einen Vorgang, bei dem die Faserschichten bzw. Faserlagen zueinander zumindest teilweise fixiert werden und die Endkontur bzw. das Endprofil zumindest endkonturnah bzw. endprofilnah ausgebildet wird. Dabei kann die Werkzeughälfte auch mehrteilig ausgebildet sein. Dadurch ist vorteilhaft, beispielsweise durch Auswechseln einzelner Bauteile der Werkzeughälfte, eine höhere Flexibilität und Variation der Oberflächenprofile möglich.

Weiterhin kann eine Halteeinrichtung vorgesehen sein, die mehrere Haltelemente umfassen kann.

Vorteilhaft kann durch das Vorsehen einer derartigen Halteeinrichtung mit mehreren Halteelementen ein Abrutschen der 1-/2-dim. Fasergebilde auf beispielsweise gekrümmten Oberflächen bzw. Oberflächenprofilen weitestgehend verringert werden, sodass auch bei derartigen gekrümmten Oberflächenprofilen die Ausbildung eines exakten und reproduzierbaren Eigenschaftsprofils des Faser-Kunststoff-Verbundes möglich wird. Dabei können die Halteelemente die auf dem Faserträger abgelegten 1-/2-dim. Fasergebilde positionieren, sodass auch bei gekrümmten Oberflächen und Oberflächenprofilen ein einigermaßen exaktes Ablegen der 1-/2-dim. Fasergebilde ohne nachträgliches Verrutschen möglich ist. Dabei können die Halteelemente derartig ausgebildet sein, dass sie in dem Faserträger versenkt werden können. Dabei kann die Halteeinrichtung beispielsweise igelartig ausgebildet sein und demzufolge mehrere Stacheln, Dornen oder dergleichen aufweisen oder es ist denkbar, dass die Halteelemente in Form von Stacheln, Dornen oder anderweitigen Begrenzungselementen auf das Oberflächenprofil des Faserträgers absenkbar sind, sodass ein Abrutschen oder Verrutschen der 1-/2-dim. Fasergebilde während des Ablegens verhindert wird. Vorteilhaft kann aufgrund einer derartigen Halteeinrichtung ggf. auf Bindemittel verzichtet werden oder der Anteil an benötigtem Bindemittel reduziert werden.

Des Weiteren kann zumindest eine Vorrichtung vorgesehen sein, die eine auf die 1-/2-dim. Fasergebilde wirkende Haftkraft erzeugt, mittels der die 1-/2-dim. Fasergebilde auf dem jeweiligen Bauteil der Produktionsmaschine gezielt gehalten werden können.

Mittels einer derartigen Haftkraft kann vorteilhaft vermieden werden, dass die 1-/2-dim. Fasergebilde sich unkontrolliert von dem jeweiligen Bauteil der Produktionsmaschine ablösen.

Des Weiteren kann der Faserträger eine Saugeinrichtung aufweisen, mittels der eine die abgelegten 1-/2-dim. Fasergebilde auf dem Faserträger fixierende Saugkraft in dem Faserträger erzeugt wird.

Einmal abgelegt können demzufolge vorteilhaft die Fasergebilde mittels der Saugkraft exakt auf dem Faserträger fixiert werden und es kann vermieden werden, dass ein Verrutschen der 1-/2-dim. Fasergebilde zueinander nach dem Ablegen auftritt. Eine derartige Saugeinrichtung kann eine Vakuumpumpe oder dergleichen sein, mit der in dem Faserträger ein Vakuum erzeugt wird, aufgrund dessen die abgelegten 1-/2-dim. Fasergebilde auf dem Faserträger beispielsweise über einem Lochblech oder einem Langlochblech oder dergleichen fixiert werden können.

Weiterhin kann der Faserträger eine elektrische Polarisierungsvorrichtung aufweisen, mittels der eine, die abgelegten 1-/2-dim. Fasergebilde auf dem Faserträger fixierende, elektrostatische Anziehungskraft erzeugt wird.

Sind dabei die 1-/2-dim. Fasergebilde entgegengesetzt zum Faserträger geladen, so haften die 1-/2-dim. Fasergebilde aufgrund einer elektrostatischen Anziehungskraft auf dem Faserträger. Dadurch kann vorteilhaft ein Verrutschen der 1-/2-dim. Fasergebilde nach dem Ablegen aufgrund der elektrostatischen Anziehungskräfte verringert bzw. verhindert werden.

Des Weiteren kann der Faserträger eine Heizvorrichtung aufweisen, die die abgelegten 1-/2-dim. Fasergebilde auf eine vorbestimmte Temperatur erwärmen.

Vorteilhaft kann durch die Erwärmung auf eine vorbestimmte Temperatur beispielsweise ein Bindemittel, das auf und/oder in den 1-/2-dim. Fasergebilden appliziert ist, aktiviert werden und dazu führen, dass die 1-/2-dim. Fasergebilde aneinander haften oder untereinander verkleben, wobei dadurch zumindest eine Teilkonsolidierung der 1-/2-dim. Fasergebilde zueinander möglich wird. Beispielsweise ist es auch denkbar, dass die 1-/2-dim. Fasergebilde derartig erwärmt werden, dass ein nachfolgendes Aufheizen beispielsweise während eines Konsolidierungsvorganges schneller vonstattengehen kann, sodass die Prozessgeschwindigkeit erhöht werden kann. Somit kann die vorbestimmte Temperatur beispielsweise eine Schmelz- oder Anschmelztemperatur des Bindemittels sein oder eine Temperatur, die maximal 10%, insbesondere maximal 20%, gegebenenfalls maximal 30% oder beispielsweise maximal 40%, unterhalb der Konsolidierungstemperatur angesiedelt ist.

Weiterhin kann der Faserträger zumindest ein erstes Förderband aufweisen, mittels dem die 1-/2-dim. Fasergebilde nach dem Ablegen in Bandlaufrichtung weiter transportiert werden.

In einer derartigen Ausbildungsform können vorteilhaft aufgrund des ersten Förderbandes endlose Faser-Kunststoff-Verbunde oder endlose FKV-Halbzeuge erzeugt werden. Somit kann die Ablegevorrichtung die 1-/2-dim. Fasergebilde mit dementsprechend gewünschter Fasergebilde-Hauptachsrichtung auf dem ersten Förderband ablegen, wobei das erste Förderband fortwährend die abgelegten 1-/2-dim. Fasergebilde vom Ablegeort zu weiteren Bereichen der Produktionsmaschine transportiert, in denen beispielsweise die 1-/2-dim. Fasergebilde fertig konsolidiert werden können.

Dabei kann die Bandlaufrichtung von zumindest einem ersten Förderband unter einem vorbestimmten Winkel β zu der Bandlaufrichtung zumindest eines weiteren ersten Förderbandes orientiert sein.

Nehmen mehrere erste Förderbänder unterschiedliche vorbestimmte Winkel β zueinander ein, so kann in einem Endlosprozess ein mehrschichtiger, in den Faserschichten unterschiedliche Fasergebilde-Hauptachsrichtungen aufweisender Faser-Kunststoff-Verbund bzw. FKV-Halbzeug hergestellt werden. Ein derartiges Verfahren wäre gegebenenfalls vorteilhaft bei einem Herstellungsverfahren für Organobleche anwendbar.

Es können auch mehrere erste Förderbänder verwendet werden, die beispielsweise analog zur Herstellung von mehrlagigen Papieren mehrere Lagen eines FKV-Halbzeuges mittels vorhergehend beschriebener Technik herstellen, wobei diese einzelnen Lagen in einer Produktionsmaschine zu einem mehrlagigen Faser-Kunststoff-Verbund oder FKV-Halbzeug durch beispielsweise Verpressen oder Vergautschen konsolidiert bzw. teilkonsolidiert werden.

Weiterhin kann die Ablegevorrichtung eine Positioniervorrichtung aufweisen, mittels der die Ablegevorrichtung derart zum Faserträger positioniert werden kann, dass unterschiedliche Winkel α eingestellt werden können.

Vorteilhaft kann aufgrund einer derartigen Verstellbarkeit der Ablegevorrichtung eine unterschiedliche Fasergebilde-Hauptachsrichtung mit ein und derselben Ablegevorrichtung erreicht werden. Dabei kann während eines Prozessschrittes der Winkel α konstant gehalten werden, so dass in verschiedenen Prozessschritten unterschiedliche aber konstante Winkel α eingestellt sind. Es ist aber auch denkbar, dass während eines Prozessschrittes der Winkel α variiert wird, so dass innerhalb eines Prozessschrittes beispielsweise bei der Ausbildung einer Faserschicht die Fasergebilde-Hauptachsrichtung der einzelnen 1-/2-dim. Fasergebilde in gewünschter Art und Weise und nach voreingestellten Regeln variiert wird. Vorteilhaft kann dadurch eine höhere Flexibilität und Variabilität der einstellbaren Fasergebilde-Hauptachsrichtungen innerhalb nur einer Produktionsmaschine und sogar innerhalb nur eines Prozessschrittes vorgenommen werden.

Des Weiteren kann die Ablegevorrichtung eine Vortriebseinrichtung aufweisen, mittels der die Ablegevorrichtung in Ablegerichtung während des Ablegens voran bewegt wird.

So kann beispielsweise vorteilhaft der Faserträger stationär ausgebildet sein und die Ablegevorrichtung aufgrund ihrer Vortriebseinrichtung sich relativ zu einem stationären oder beweglich ausgebildeten Faserträger in Ablegerichtung der 1-/2-dim. Fasergebilde voran bewegen. Dadurch kann die Produktionsmaschine konstruktiv einfacher ausgebildet werden und der Verschleiß aufgrund der reduzierten Anzahl von beweglichen Teilen verringert werden.

Des Weiteren kann die Ablegevorrichtung eine Saugeinrichtung aufweisen, mittels der eine die abgelegten 1-/2-dim. Fasergebilde auf der Ablegevorrichtung fixierende Saugkraft in der Ablegevorrichtung erzeugt wird. Somit können die 1-/2-dim. Fasergebilde vorteilhaft auf der Ablegevorrichtung exakt ausgerichtet werden und dort fixiert und mit dementsprechender analoger Exaktheit auf den Faserträger übertragen werden. Dadurch ist eine hohe Prozesssicherheit und ein exaktes Positionieren der 1-/2-dim. Fasergebilde möglich.

Des Weiteren kann die Ablegevorrichtung eine Heizvorrichtung aufweisen, mittels der die zum Faserträger hin orientierte Oberfläche des jeweiligen abzulegenden 1-/2-dim. Fasergebildes auf eine vorbestimmte Temperatur erwärmt wird. Aufgrund einer derartigen Erwärmung der 1-/2-dim. Fasergebilde können vorteilhaft funktionelle Bestandteile des 1-/2-dim. Fasergebildes auf der Oberfläche aktiviert werden, so dass beispielsweise die Oberfläche eine gewisse Haft- bzw. Klebewirkung aufweist und dementsprechend besser auf dem abgelegten bzw. positionierten Bereich haftet.

Des Weiteren kann in beliebiger Reihenfolge, zusätzlich oder alternativ, ein Einstellen der jeweiligen Haftkräfte derart vorgenommen werden, dass die jeweilige Haftkraft an der Ablegevorrichtung kleiner ist, als die jeweilige Haftkraft an dem Faserträger. Dabei versteht man unter Haftkräfte beispielsweise die Saugkraft, eine elektrostatische Anziehungskraft, eine Adhäsionskraft oder dergleichen. Vorteilhaft kann durch eine derartige Ausgestaltung der Haftkräfte eine einfache Übertragung der 1-/2-dim. Fasergebilde von der Ablegevorrichtung auf den Faserträger erreicht werden, ohne dass eine aufwändige Regelung notwendig ist.

Weiterhin kann in beliebiger Reihenfolge zusätzlich oder alternativ ein Absenken der jeweiligen Haftkraft an der Ablegevorrichtung zum Ablagezeitpunkt und/oder im Ablagebereich vorgenommen werden. Vorteilhaft kann durch ein derartiges Absenken, wobei auch ein Absenken der Haftkraft auf 0 denkbar ist, ein einfaches Ablösen der 1-/2-dim. Fasergebilde während des Ablegens an der Ablegevorrichtung erreicht werden.

Des Weiteren ist auch ein Erhöhen der jeweiligen Haftkraft an den Faserträger zum Ablagezeitpunkt und/oder im Ablagebereich denkbar. Aufgrund eines Erhöhens ist vorteilhaft eine größere Sicherheit bei der Übernahme der 1-/2-dim. Fasergebilde durch den Faserträger von der Ablegevorrichtung gegeben. Somit ist es denkbar, dass vorteilhaft beispielsweise sogar ein regelrechtes Ansaugen der 1-/2-dim. Fasergebilde durch den Faserträger zum Ablagezeitpunkt und/oder im Ablagebereich stattfinden kann.

Des Weiteren kann mittels einer Fixiervorrichtung nach und/oder während des Ablegens der 1-/2-dim. Fasergebilde auf den Faserträger die 1-/2-dim. Fasergebilde zueinander fixiert werden. Vorteilhaft kann durch eine derartige Fixiervorrichtung ein nach dem Ablegen auftretendes Verrutschen der 1-/2-dim. Fasergebilde verringert bzw. verhindert werden.

Weiterhin kann mittels einer Fixiervorrichtung nach und/oder während des Ablegens der 1-/2-dim. Fasergebilde auf den Faserträger die 1-/2-dim. Fasergebilde auf dem Faserträger fixiert werden. Vorteilhaft ist aufgrund der Fixiervorrichtung ein Verrutschen der 1-/2-dim. Fasergebilde auf dem Faserträger verringert bzw. verhindert.

Weiterhin kann die Fixiervorrichtung zumindest eine zweite Werkzeughälfte mit einem zur ersten Werkzeughälfte komplementären Oberflächenprofil aufweisen. Dabei können die Oberflächenprofile der beiden Werkzeughälften im Zusammenwirken miteinander die mit dem Verfahren herstellbaren Faser-Kunststoff-Verbunde oder das mit dem Verfahren herstellbare FKV-Halbzeug während eines Konsolidierungsvorganges zumindest teilweise profilieren oder konsolidieren bzw. teilprofilieren oder teilkonsolidieren. Vorteilhaft kann durch eine derartig integrale Ausbildung eines Werkzeuges, umfassend zwei Werkzeughälften, mit der Produktionsmaschine, innerhalb einer Produktionsmaschine das FKV-Halbzeug bzw. der Faser-Kunststoff-Verbund aus 1-/2-dim. Fasergebilden abgelegt werden und zumindest teilprofiliert werden, so dass eine endkonturnahe Herstellung mittels des Verfahrens bzw. der Produktionsmaschine möglich wird.

Des Weiteren kann die Fixiervorrichtung eine Pressvorrichtung aufweisen, mit der die auf dem Faserträger abgelegten 1-/2-dim. Fasergebilde zueinander und/oder auf dem Faserträger durch Verpressen fixiert werden. Auch aufgrund dieser integrierten Bauweise ist innerhalb eines Verfahrens bzw. innerhalb einer Produktionsmaschine ein Verpressen der abgelegten 1-/2-dim. Fasergebilde möglich. Dadurch kann die Prozessgeschwindigkeit erhöht werden und zudem können Transportwege verringert werden.

Des Weiteren kann die Pressvorrichtung zumindest eine Walze aufweisen, wobei mittels der Walze die Fixierung der auf dem Faserträger abgelegten 1-/2-dim. Fasergebilde zueinander durch Verpressen zwischen der zumindest einen Walze und dem Faserträger durchgeführt wird. Vorteilhaft können beispielsweise durch eine derartige Walze ein Endlosverfahren ausgebildet werden, wobei auf einem ersten Förderband die 1-/2-dim. Fasergebilde abgelegt werden und nach Weitertransport zur Walze mittels derselben verpresst werden können. Dadurch ist eine erhöhte Prozessintegration möglich und zudem können größere Mengen an Faser-Kunststoff-Verbunden oder FKV-Halbzeugen in kürzerer Zeit hergestellt werden.

Dabei kann die zumindest eine Walze auch der Ablegevorrichtung in Ablegerichtung nachfolgend ausgebildet sein. Durch eine derartige Ausbildung der Walze beispielsweise als Abroller, der zudem beheizt sein kann, ist auch bei gekrümmten Oberflächen ein konturnahes Verpressen der 1-/2-dim. Fasergebilde durch eine Walze möglich.

Des Weiteren kann die Pressvorrichtung zumindest zwei Walzen aufweisen, wobei die Fixierung der auf dem Faserträger abgelegten 1-/2-dim. Fasergebilde zueinander durch Verpressen zwischen den beiden Walzen durchgeführt werden kann. Vorteilhaft an der zwei-Walzen-Ausführungsform ist ebenfalls die Möglichkeit eines Endlosprozesses, beispielsweise wie er aus den Papiermaschinen bekannt ist. Dabei können die 1-/2-dim. Fasergebilde beispielsweise abgelegt auf Lochsieben oder Lochschlitzsieben, durch zumindest zwei Walzen verpresst werden, wobei die Walzen zusätzlich auch noch beheizt sein können.

Des Weiteren kann die Fixiervorrichtung eine Heizeinrichtung aufweisen, die die abgelegten 1-/2-dim. Fasergebilde durch Erwärmung auf eine vorbestimmte Temperatur zueinander fixieren. Eine derartige Heizeinrichtung kann, wie schon zuvor beschrieben, zumindest eine Walze beheizen oder aufgrund von Wärmestrahlung, Heißluft oder elektrische Beheizung den Wärmeeintrag in die abgelegten 1-/2-dim. Fasergebilde erzeugen. Dabei können durch die Erwärmung in den abgelegten 1-/2-dim. Fasergebilden angeordnete Substanzen aktiviert werden, so dass beispielsweise aufgrund von Klebewirkung, Polymerisation oder Verschmelzen von Kunststoffen die 1-/2-dim. Fasergebilde zueinander fixiert werden.

Des Weiteren ist es auch denkbar, dass die Fixiereinrichtung eine Bestrahlungsvorrichtung aufweist, die die abgelegten 1-/2-dim. Fasergebilde durch Bestrahlung zueinander fixiert. Dabei kann als Bestrahlung Infrarotstrahlung, UV-Strahlung, Laserstrahlung, Maserstrahlung, ein Induktionsfeld punktförmig oder flächig orientiert und positioniert verwendet werden. Vorteilhaft kann aufgrund der Verwendung einer Bestrahlungsvorrichtung die Fixiervorrichtung weiter entfernt von dem Faserträger positioniert werden, so dass auch längere Strecken aufgrund der gegebenenfalls fokussierten Strahlung überwindbar sind, so dass vorteilhaft der Freiraum durch andere Bauteile zumindest zeitweise eingenommen werden kann. Zudem ist mittels beispielsweise einer fokussierten Bestrahlungseinrichtung der Wärmeeintrag vorteilhaft punktgenau möglich, so dass nur bestimmte Punkte in den abgelegten 1-/2-dim. Fasergebilden fixiert werden, so dass aufgrund der nur teilweisen Fixierung ein nachträgliches Umformen beispielsweise des FKV-Halbzeuges möglich bleibt.

Des Weiteren kann die Fixiervorrichtung eine Sprühvorrichtung aufweisen, die die abgelegten 1-/2-dim. Fasergebilde durch Besprühen mit einem Bindemittel oder Matrixmaterial zueinander fixiert. Vorteilhaft kann aufgrund einer Sprühvorrichtung das Bindemittel erst nach dem Ablegen der 1-/2-dim. Fasergebilde aufgetragen werden, so dass ein Verkleben oder Anhaften der Fasergebilde während des Ablegens oder davor weitestgehend vermieden werden kann. Zudem ist es möglich, dass mittels der Sprühvorrichtung eine derartig große Menge an Bindemittel oder Matrixmaterial aufgetragen wird, dass ein weiterer Auftrag von Matrixmaterial während des Konsolidierungsvorganges nicht mehr notwendig ist.

In einem weiteren Aspekt der Erfindung wird eine Produktionsmaschine nach Anspruch 10 zur Herstellung eines 2-/3-dim. Fasergebildes, insbesondere als Faser-Kunststoff-Verbund oder FKV-Halbzeug ausgebildet, gemäß einem vorhergehend beschriebenen Verfahren mit einer Ablegevorrichtung und einem Faserträger vorgeschlagen. Vorteilhaft können mittels einer derartigen Produktionsmaschine die vorhergehend beschriebenen Vorteile erreicht werden.

Weitere wichtige Merkmale und Vorteile der Erfindung ergeben sich aus den Unteransprüchen, aus den Zeichnungen oder aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: ein Ablegen von 1-/2-dim. Fasergebilden mit einer zu einer Ablegerichtung unterschiedlichen Fasergebilde-Hauptachsrichtung,
- Fig. 2: ein Ablegen von 1-/2-dim. Fasergebilden mittels einer bewegten Ablegevorrichtungund einem stationären Faserträger,
- Fig. 3: mögliche Faserpositionierungen und -orientierungen.

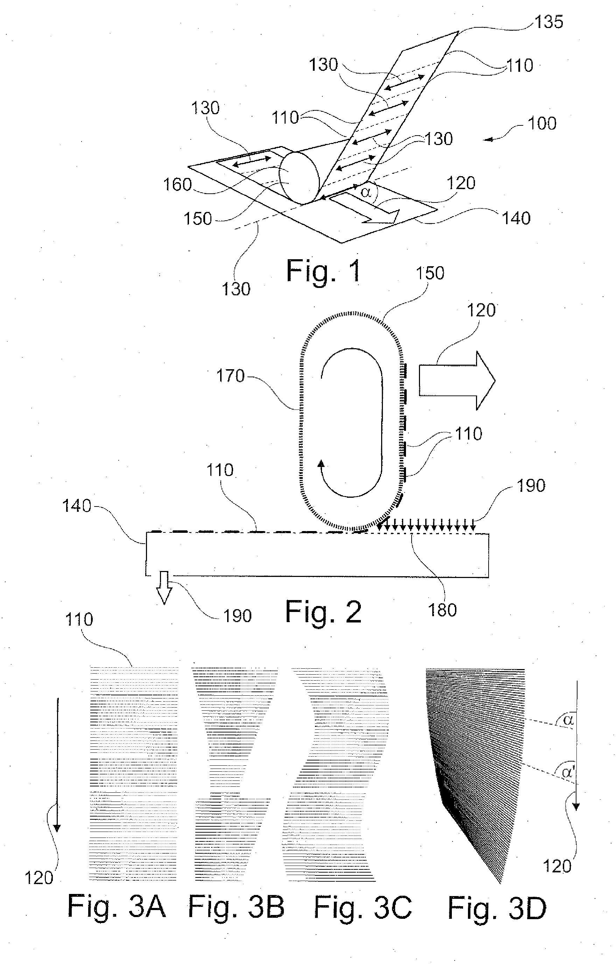

Ein Verfahren 100, wie in Fig. 1 gezeigt, bei dem 1-/2-dim. Fasergebilde 110 zu einer Ablegerichtung 120 quer abgelegt werden, zeichnet sich dadurch aus, dass eine Fasergebilde-Hauptachsrichtung 130 der abgelegten 1-/2-dim. Fasergebilde 110 zur Ablegerichtung 120 unter einem Winkel α>0° angeordnet sind. Weiterhin sind die 1-/2-dim. Fasergebilde 110 nicht entlang der Ablegerichtung 120 und/oder der Fasergebilde-Hauptachsrichtung 130 gespannt. Die Spannungsfreiheit in Ablegerichtung 120 kann beispielsweise dadurch umgesetzt werden, dass die einzelnen miteinander zu einem Strang 135 verbundenen 1-/2-dim. Fasergebilde 110 in Richtung eines Faserträgers 140 herabhängen und in diesem herabhängenden Zustand und somit ohne zusätzliche Spannung dem Faserträger 140 zugeführt werden. Somit werden die 1-/2-dim. Fasergebilde 110 nicht in gespanntem Zustand auf einen Faserträger 140 abgelegt, sondern sie können spannungsfrei unter jedem beliebigem Winkel α, und letztendlich auch teilweise unter dem Winkel α = 0, durch eine Ablegevorrichtung 150 auf den Faserträger 140 abgelegt werden. Dabei kann zudem eine Fixiervorrichtung 160 vorgesehen sein, die als Walze 160 ausgebildet sein kann.

Zudem kann, wie in Fig. 2 gezeigt, die Ablegevorrichtung 150 in Ablegerichtung 120 bewegt werden. Demzufolge ist eine nicht in Fig. 2 gezeigte Vortriebsvorrichtung zum Bewegen der Ablegevorrichtung 150 vorgesehen. Zudem kann der Faserträger 140 stationär ausgebildet sein, beispielsweise als ein Siebsaugtisch oder dergleichen. Es ist aber auch denkbar, dass der Faserträger 140 als Förderband mit einem Lochsieb ausgebildet ist. Zudem ist die Ablegevorrichtung 150 als ein Förderband 170 ausgebildet, wobei sich das Förderband 170 mit seiner Oberfläche auf dem Faserträger 140 abrollt und dabei gleichzeitig die 1-/2-dim. Fasergebilde 110 auf dem Faserträger 140 ablegt. Zudem kann der Faserträger 140 eine Lochstruktur 180 aufweisen, auf der die 1-/2-dim. Fasergebilde 110 mittels einer Saugkraft 190 angesaugt werden. Das Förderband 170 ist besaugt ausgebildet, sodass die 1-/2-dim. Fasergebilde 110 während des Transportes auf dem Förderband 170 mittels einer Saugkraft fixiert werden.

Mit einem derartigen, insbesondere spannungsfreien, Querablegen von 1-/2-dim. Fasergebilden 110 können unter anderem die in den Fig. 3A bis 3D gezeigten Ablagemöglichkeiten von 1-/2-dim. Fasergebilden 110 hergestellt werden. So ist es denkbar, dass gleich lange 1-/2-dim. Fasergebilde 110 parallel zueinander und beispielsweise unter einem vorbestimmten Winkel α zur Ablegerichtung 120 abgelegt werden, wie in Fig. 3A gezeigt. In Figur 3B sind 1-/2-dim. Fasergebilde 110 mit unterschiedlichen Faserlängen abgelegt, wobei der Winkel α nicht verändert wird. In der Figur 3C sind 1-/2-dim. Fasergebilde 110 mit gleicher Faserlänge und/oder gleichem Winkel aber mit unterschiedlicher Positionierung abgelegt. Die Anordnung der 1-/2-dim. Fasergebilde 110, gem. der Fig. 3D, weist zumindest einen im Verlauf der Ablegerichtung 120 veränderlichen Winkel α, α' zur Ablegerichtung 120 aus. Es sind aber auch beliebige andere und Kombinationen von Ablagemöglichkeiten denkbar.

## Patentansprüche

1. Verfahren zum Ablegen von 1-/2-dim. Fasergebilden (110) zu einem 2-/3-dim. Fasergebilde, insbesondere ausgebildet als ein Faser-Kunststoff-Verbund oder FKV-Halbzeug, mit einer Produktionsmaschine, umfassend zumindest eine Ablegevorrichtung (150) und zumindest einen Faserträger (140), wobei zumindest eine Ablegevorrichtung (150) in einer Ablegerichtung (120) die 1-/2-dim. Fasergebilde (110) auf zumindest einem Faserträger (140) derart geordnet ablegt, dass die einzelnen abgelegten 1-/2-dim. Fasergebilde (110) zumindest eine Nahordnung aufweisen und hierdurch die unmittelbar und in näherer Nachbarschaft abgelegten 1-/2-dim. Fasergebilde (110) zueinander gemäß einer Regel oder regelmäßig abgelegt sind, wobei die Fasergebilde-Hauptachsrichtungen (130) der abgelegten 1-/2-dim. Fasergebilde (110) zur Ablegerichtung (120) einen Winkel α>0° einnehmen,
**dadurch gekennzeichnet, dass**
die Ablegevorrichtung (150) als ein Förderband (170) ausgebildet ist, welches mit seiner Oberfläche auf dem Faserträger (140) abrollt und dabei gleichzeitig die 1-/2-dim. Fasergebilde (110) spannungsfrei auf dem Faserträger (140) ablegt, wobei das Förderband (170) besaugt ausgebildet ist, sodass die 1-/2-dim. Fasergebilde (110) während des Transportes auf dem Förderband (170) mittels einer Saugkraft fixiert werden.

2. Verfahren nach Anspruch 1,
wobei in beliebiger Reihenfolge, zusätzlich oder alternativ zumindest ein Verfahrensschritt aus folgender Gruppe durchgeführt wird:
- die 1-/2-dim. Fasergebilde (110) werden auch hinsichtlich ihrer Fasergebilde-Hauptachsrichtung (130) spannungsfrei auf dem Faserträger (140) abgelegt;
- die 1-/2-dim. Fasergebilde (110) werden mit einem Bindemittel oder Matrixmaterial derart vorbehandelt, dass sie untereinander haften;
- die 1-/2-dim. Fasergebilde (110) werden mit einem Bindemittel oder Matrixmaterial derart vorbehandelt, dass sie an/auf dem Faserträger (140) haften.

3. Verfahren nach einem der vorhergehenden Ansprüche,
wobei die Ablegevorrichtung (150) in Ablegerichtung (120) die 1-/2-dim. Fasergebilde (110) auf dem Faserträger (140) derart geordnet ablegt, dass die einzelnen 1-/2-dim. Fasergebilde (110) eine Fernordnung aufweisen und hierdurch nicht nur die unmittelbar und in näherer Nachbarschaft abgelegten 1-/2-dim. Fasergebilde (110), sondern auch die weiter entfernten Fasergebilde (110) zueinander gemäß einer Regel oder regelmäßig abgelegt sind.

4. Verfahren nach einem der vorhergehenden Ansprüche,
wobei der Faserträger (140) zumindest ein Bauteil aus folgender Gruppe aufweist:
eine erste Werkzeughälfte mit einem Oberflächenprofil, das den mit dem Verfahren herstellbaren Faser-Kunststoff-Verbund oder das mit dem Verfahren herstellbare FKV-Halbzeug während eines Konsolidierungsvorganges zumindest teilweise profiliert,
eine Haltevorrichtung, umfassend mehrere Halteelemente, die die auf dem Faserträger (140) abgelegten 1-/2-dimensionale Fasergebilde (110) positioniert, wobei die Halteelemente in dem Faserträger (140) versenkt werden können,
eine Saugvorrichtung, mittels der eine, die abgelegten 1-/2-dim. Fasergebilde (110) auf dem Faserträger (140) fixierende, Saugkraft (190) in dem Faserträger (140) erzeugt wird,
eine elektrische Polarisierungsvorrichtung, mittels der eine, die abgelegten 1-/2-dim. Fasergebilde (110) auf dem Faserträger (140) fixierende, elektrostatische Anziehungskraft erzeugt wird, wobei die 1-/2-dim. Fasergebilde (110) entgegengesetzt zum Faserträger (140) geladen sind,
eine Heizvorrichtung, die die abgelegten 1-/2-dimensionale Fasergebilde (110) auf eine vorbestimmte Temperatur erwärmt,
zumindest ein erstes Förderband, mittels dem die 1-/2-dim. Fasergebilde (110) nach dem Ablegen in Bandlaufrichtung weitertransportiert werden, wobei die 1-/2-dim. Fasergebilde (110) mittels der Ablegevorrichtung (150) direkt auf das erste Förderband abgelegt werden können und/oder wobei die Bandlaufrichtung von zumindest einem ersten Förderband unter einem vorbestimmten Winkel β zu der Bandlaufrichtung zumindest eines weiteren ersten Förderbandes orientiert ist.

5. Verfahren nach einem der vorhergehenden Ansprüche,
wobei die Ablegevorrichtung (150) zumindest ein Bauteil aus folgender Gruppe aufweist:
eine Positioniervorrichtung, mittels der die Ablegevorrichtung (150) derart zum Faserträger (140) positioniert werden kann, dass unterschiedliche Winkel α eingestellt werden können,
eine Vortriebsvorrichtung, mittels der die Ablegevorrichtung (150) in Ablegerichtung (120) während des Ablegens voran bewegt wird,
eine Saugvorrichtung, mittels der eine, die abgelegten 1-/2-dim. Fasergebilde (110) auf der Ablegevorrichtung (150) fixierende, Saugkraft in der Ablegevorrichtung (150) erzeugt wird,
eine Heizvorrichtung, mittels der die zum Faserträger (140) hin orientierte Oberfläche des jeweiligen abzulegenden 1-/2-dim. Fasergebildes (110) auf eine vorbestimmte Temperatur erwärmt wird.

6. Verfahren nach einem der Ansprüche 4 oder 5,
wobei in beliebiger Reihenfolge, zusätzlich oder alternativ zumindest einer der folgenden Verfahrensschritte durchgeführt wird:
ein Einstellen der jeweiligen Haftkräfte derart, dass die jeweilige Haftkraft an der Ablegevorrichtung (150) kleiner ist, als die jeweilige Haftkraft an dem Faserträger (140),
ein Absenken der jeweiligen Haftkraft an der Ablegevorrichtung (150) zum Ablegezeitpunkt und/oder im Ablegebereich,
ein Erhöhen der jeweiligen Haftkraft an den Faserträger (140) zum Ablegezeitpunkt und/oder im Ablegebereich.

7. Verfahren nach einem der Ansprüche 1 bis 6,
wobei mittels einer Fixiervorrichtung (160) nach und/oder während des Ablegens der 1-/2-dim. Fasergebilde (110) auf dem Faserträger (140) die 1-/2-dim. Fasergebilde (110) zueinander fixiert werden.

8. Verfahren nach einem der Ansprüche 1 bis 6,
wobei mittels einer Fixiervorrichtung (160) nach und/oder während des Ablegens der 1-/2-dim. Fasergebilde (110) auf dem Faserträger (140) die 1-/2-dim. Fasergebilde (110) auf dem Faserträger (140) fixiert werden.

9. Verfahren nach einem der Ansprüche 7 oder 8,
wobei die Fixiervorrichtung (160) zumindest ein Bauteil aus folgender Gruppe aufweist:
eine zweite Werkzeughälfte mit einem zur ersten Werkzeughälfte komplementären Oberflächenprofil, das den mit dem Verfahren herstellbaren Faser-Kunststoff-Verbund oder das mit dem Verfahren herstellbare FKV-Halbzeug während eines Konsolidierungsvorganges profiliert,
eine Pressvorrichtung, mit der die auf dem Faserträger (140) abgelegten 1-/2-dim. Fasergebilde (110) zueinander und/oder auf dem Faserträger (140) durch Verpressen fixiert werden,
zumindest eine Walze der Pressvorrichtung, wobei die Fixierung der auf dem Faserträger (140) abgelegten 1-/2-dim. Fasergebilde (110) zueinander durch Verpressen zwischen der zumindest einen Walzen und dem Faserträger (140) durchgeführt wird, wobei die zumindest eine Walze der Ablegevorrichtung (150) in Ablegerichtung (120) nachfolgend ausgebildet sein kann,
zumindest zwei Walzen der Pressvorrichtung, wobei die Fixierung der auf dem Faserträger (140) abgelegten 1-/2-dim. Fasergebilde (110) zueinander durch Verpressen zwischen den beiden Walzen durchgeführt wird,
eine Heizvorrichtung , die die abgelegten 1-/2-dim. Fasergebilde (110) durch Erwärmung auf eine vorbestimmte Temperatur zueinander fixiert,
eine Bestrahlungsvorrichtung, die die abgelegten 1-/2-dim. Fasergebilde (110) durch Bestrahlung zueinander fixiert,
eine Sprühvorrichtung, die die abgelegten 1-/2-dim. Fasergebilde (110) durch Besprühen mit einem Bindemittel oder Matrixmaterial zueinander fixiert.

10. Produktionsmaschine zur Herstellung eines 2-/3-dim. Fasergebildes (110) aus 1-/2-dim. Fasergebilden (110) mit einem Verfahren (100) nach einem der vorhergehenden Ansprüche, umfassend einen Faserträger (140) und eine Ablegevorrichtung (150), mit der die 1-/2-dim. Fasergebilde (110) in einer Ablegerichtung (120) auf dem Faserträger (140) ablegbar sind, wobei die Produktionsmaschine dazu ausgebildet ist, dass die einzelnen von der Ablegevorrichtung (150) auf dem Faserträger (140) abgelegten 1-/2-dim. Fasergebilde (110) zumindest eine Nahordnung aufweisen und hierdurch die unmittelbar und in näherer Nachbarschaft abgelegten 1-/2-dim. Fasergebilde (110) zueinander gemäß einer Regel oder regelmäßig abgelegt sind und die Fasergebilde-Hauptachsrichtungen (130) der abgelegten 1-/2-dim. Fasergebilde (110) zur Ablegerichtung (120) einen Winkel α>0° einnehmen, **dadurch gekennzeichnet, dass** die Ablegevorrichtung (150) als ein Förderband (170) ausgebildet ist, welches mit seiner Oberfläche auf dem Faserträger (140) abrollt und dabei gleichzeitig die 1-/2-dim. Fasergebilde (110) spannungsfrei auf dem Faserträger (140) ablegt, und wobei das Förderband (170) besaugt ausgebildet ist, sodass die 1-/2-dim. Fasergebilde (110) während des Transportes auf dem Förderband (170) mittels einer Saugkraft (190) fixiert werden.

## Claims

1. Method for the placement of one-/two-dimensional fibre structures (110) in order to form a two-/three-dimensional fibre structure designed as a fibre-plastic composite or fibre-plastic composite (FKV) semi-finished product, with a production machine, comprising at least one placement device (150) and at least one fibre support (140), wherein at least one placement device (150) places the one-/two-dimensional fibre structure (110) on at least one fibre support (140) in a placement direction (120) ordered in such a manner that the individual placed one-/two- dimensional fibre structures (110) have at least one short-range order and thus the one/two-dimensional fibre structures (110), which are placed directly or in the immediate vicinity, are placed together according to a rule or regularly, wherein the fibre structure main axis directions (130) of the placed one-/two-dimensional fibre structures (110) assume an angle α>0° relative to the placement direction (120),
**characterised in that**
the placement device (150) is designed as a conveyor belt (170), which rolls with its surface on the fibre support (140) and thereby at the same time places the one-/two-dimensional fibre structures (110) on the fibre support (140) free of tension, wherein
the conveyor belt (170) is designed to be sucked, so that the one-/two-dimensional fibre structures (110) are fixed during the transport on the conveyor belt (170) by means of a suction force.

2. Method according to Claim 1,
wherein in any sequence, additionally or alternatively at least one process step from the following group is carried out:
- the one-/two-dimensional fibre structures (110) are also placed in respect to their fibre structure main axis direction (130) on the fibre support (140) free of tension;
- the one-/two-dimensional fibre structures (110) are pre-treated with a binding agent or matrix material in such a manner that they adhere with one another.
- the one-/two-dimensional fibre structures (110) are pre-treated with a binding agent or matrix material in such a manner that they adhere to the fibre support (140).

3. Method according to any one of the preceding claims,
wherein the placement device (150) places the one-/two-dimensional fibre structures (110) on the fibre support (140) in the placement direction (120) ordered in such a manner that the individual fibre structures (110) have a long-range order and thus not only the one-/two-dimensional fibre structures (110), which are placed directly and in the immediate vicinity, but rather also the fibre structures further away, are placed together according to a rule or regularly.

4. Method according to any one of the preceding claims,
wherein the fibre support (140) has at least one component from the following group:
a first tool half with a surface profile, which at least partially profiles the fibre plastic composite producible with the method or the fibre plastic composite (FKV) semi-finished product producible with the method during a consolidation process,
a retaining device, comprising a plurality of retaining elements, which positions the one-/two-dimensional fibre structures (110) placed on the fibre support (140),
wherein the retaining elements can be countersunk in the fibre support (140),
a suction device, by means of which a suction force (190), which fixes the placed one-/two-dimensional fibre structures (110) on the fibre support (140), is generated in the fibre support (140),
an electrical polarisation device, by means of which an electrostatic attractive force, which fixes the placed one-/two-dimensional fibre structures (110) on the fibre support (140), is generated, wherein the one-/two-dimensional fibre structures (110) are charged oppositely to the fibre support (140),
a heating device, which heats the placed one-/two-dimensional fibre structures (110) to a predetermined temperature,
at least one first conveyor belt, by means of which the one-/two-dimensional fibre structures (110) are transported further after the placement in the belt running direction, wherein the one-/two-dimensional fibre structures (110) can be placed by means of the placement device (150) directly on the first conveyor belt and/or wherein the belt running direction of at least one first conveyor belt is oriented at a predetermined angle β relative to the belt running direction at least of one further first conveyor belt.

5. Method according to any one of the preceding claims,
wherein the placement device (150) has at least one component from the following group:
a positioning device, by means of which the placement device (150) can be positioned relative to the fibre support (140) in such a manner that different angles α can be set,
a propulsion device, by means of which the placement device (150) is advanced in the placement direction (120) during the placement,
a suction device, by means of which a suction force, which fixes the placed one-/two-dimensional fibre structures (110) on the placement device (150), is generated in the placement device (150),
a heating device, by means of which the surface of the respective one-/two-dimensional fibre structures (110) to be placed, which are oriented towards the fibre support (140), is heated to a predetermined temperature.

6. Method according to Claims 4 or 5,
wherein in any sequence, additionally or alternatively at least one of the following process steps is carried out:
an adjusting of the respective adhesive forces in such a manner that the respective adhesive force on the placement device (150) is smaller than the respective adhesive force on the fibre support (140),
a decreasing of the respective adhesive force on the placement device (150) at the placement time and/or in the placement area,
an increasing of the respective adhesive force on the fibre support (140) at the placement time and/or in the placement area.

7. Method according to any one of Claims 1 to 6,
wherein by means of a fixing device (160) after and/or during the placement of the one-/two-dimensional fibre structures (110) on the fibre support (140) the one-/two-dimensional fibre structures (110) are fixed to one another.

8. Method according to any one of Claims 1 to 6,
wherein by means of a fixing device (160) after and/or during the placement of the one-/two-dimensional fibre structures (110) on the fibre support (140) the one-/two-dimensional fibre structures (110) are fixed on the fibre support (140).

9. Method according to any one of Claims 7 or 8,
wherein the fixing device (160) has at least one component from the following group:
a second tool half with a surface profile complementary to the first tool half, which profiles the fibre plastic composite producible with the method or the fibre plastic composite (FKV) semi-finished product producible with the method during a consolidation process,
a pressing device, with which the one-/two-dimensional fibre structures (110) placed on the fibre support (140) are fixed to one another and/or on the fibre support (140) by pressing,
at least one roller of the pressing device, wherein the fixing of the one-/two-dimensional fibre structures (110) placed on the fibre support (140) to one another is carried out by pressing between the at least one roller and the fibre support (140), wherein the at least one roller of the placement device (150) can be subsequently formed in the placement direction (120),
at least two rollers of the pressing device, wherein the fixing of the one-/two-dimensional fibre structures (110) placed on the fibre support (40) to one another is carried out by pressing between the two rollers,
a heating device, which fixes the placed one-/two-dimensional fibre structures (110) to one another by heating to a predetermined temperature,
an irradiation device, which fixes the placed one-/two-dimensional fibre structures (110) to one another by irradiation,
a spraying device, which fixes the placed one-/two-dimensional fibre structures (110) to one another by spraying with a binding agent or matrix material.

10. Production machine for producing a two-/three-dimensional fibre structure (110) from one-/two-dimensional fibre structures (110) with a method (100) according to any one of the preceding claims, comprising a fibre support (140) and a placement device (150), with which the one-/two-dimensional fibre structures (110) can be placed in a placement direction (120) on the fibre support (140), wherein the production machine is designed such that the individual one-/two-dimensional fibre structures (110), which are placed by the placement device (150) on the fibre support (140), have at least one short-range order and thus the one-/two-dimensional fibre structures (110) placed directly and in the immediate vicinity are placed together according to a rule or regularly, and the fibre structure main axis directions (130) of the placed one-/two-dimensional fibre structures (110) assume an angle α>0° relative to the placement direction (120), **characterised in that** the placement device (150) is designed as a conveyor belt (170), which rolls with its surface on the fibre support (140) and thereby at the same time places the one-/two-dimensional fibre structures (110) on the fibre support (140) free of tension, and wherein the conveyor belt (170) is designed to be sucked, so that the one-/two-dimensional fibre structures (110) are fixed during the transport on the conveyor belt (170) by means of a suction force (190).

## Revendications

1. Procédé servant à appliquer des structures de fibres 1D/2D (110) pour obtenir une structure de fibres 2D/3D, notamment réalisée sous la forme d'un matériau plastique composite renforcé de fibres ou d'un produit semi-fini en un matériau plastique composite renforcé de fibres, à l'aide d'une machine de production comprenant au moins un dispositif d'application (150) et au moins un support de fibres (140), dans lequel au moins un dispositif d'application (150) assure l'application des structures de fibres 1D/2D (110) dans une direction d'application (120) sur au moins un support de fibres (140) de telle manière selon un ordre donné que les différentes structures de fibres 1D/2D (110) appliquées présentent au moins un ordre peu éloigné et qu'ainsi les structures de fibres 1D/2D (110) appliquées directement et à proximité plus immédiate sont appliquées les unes par rapport aux autres selon une règle ou régulièrement, dans lequel les directions de l'axe principal (130) des structures de fibres 1D/2D (110) appliquées forment un angle α > 0° par rapport à la direction d'application (120),
**caractérisé en ce que**
le dispositif d'application (150) est réalisé sous la forme d'un convoyeur à bande (170), qui se déroule par sa surface sur le support de fibres (140) et dépose dans ce cadre simultanément les structures de fibres 1D/2D (110) sans tension sur le support de fibres (140), dans lequel le convoyeur à bande (170) est réalisé de manière aspirée de sorte que les structures de fibres 1D/2D (110) sont fixées au cours du transport sur le convoyeur à bande (170) au moyen d'une force d'aspiration.

2. Procédé selon la revendication 1,
dans lequel est effectuée dans un ordre quelconque en supplément ou en variante au moins une étape de procédé issue du groupe qui suit :
- les structures de fibres 1D/2D (110) sont appliquées sans tension sur le support de fibres (140) également par rapport à leur direction d'axe principal (130) de structure de fibres ;
- les structures de fibres 1D/2D (110) sont préalablement traitées avec un liant ou un matériau de matrice de telle manière qu'elles adhèrent les unes aux autres ;
- les structures de fibres 1D/2D (110) sont préalablement traitées avec un liant ou un matériau de matrice de telle manière qu'elles adhèrent au niveau du/sur le support de fibres (140).

3. Procédé selon l'une quelconque des revendications précédentes,
dans lequel le dispositif d'application (150) applique dans la direction d'application (120) les structures de fibres 1D/2D (110) sur le support de fibres (140) de telle manière selon un ordre donné que les diverses structures de fibres 1D/2D (110) présentent un ordre éloigné et qu'ainsi non seulement les structures de fibres 1D/2D (110) appliquées directement et à proximité plus immédiate mais également les structures de fibres (110) davantage éloignées sont appliquées les unes par rapport aux autres selon une règle ou régulièrement.

4. Procédé selon l'une quelconque des revendications précédentes,
dans lequel le support de fibres (140) présente au moins un composant issu du groupe qui suit :
une première moitié de moule comprenant un profil de surface, qui profile au moins en partie le matériau plastique composite renforcé de fibres pouvant être fabriqué avec le procédé ou le produit semi-fini en un matériau composite renforcé de fibres pouvant être fabriqué avec le procédé au cours d'une opération de consolidation,
un dispositif de maintien, comprenant plusieurs éléments de maintien, qui positionne les structures de fibres 1D/2D (110) appliquées sur le support de fibres (140),
dans lequel les éléments de maintien peuvent être enfoncés dans le support de fibres (140),
un dispositif d'aspiration, au moyen duquel une force d'aspiration (190) fixant les structures de fibres 1D/2D (110) sur le support de fibres (140) est produite dans le support de fibres (140),
un dispositif de polarisation électrique, au moyen duquel une force d'attraction électrostatique fixant les structures de fibres 1D/2D (110) sur le support de fibres (140) est produite, dans lequel les structures de fibres 1D/2D (110) sont chargées de manière opposée au support de fibres (140),
un dispositif de chauffage, qui réchauffe les structures de fibres 1D/2D (110) appliquées à une température prédéfinie,
au moins un premier convoyeur à bande, au moyen duquel les structures de fibres 1D/2D (110) continuent après l'application à être transportées dans la direction de défilement de bande, dans lequel les structures de fibres 1D/2D (110) peuvent être appliquées directement sur le convoyeur à bande au moyen du dispositif d'application (150) et/ou dans lequel la direction de défilement de bande d'au moins un premier convoyeur à bande est orientée selon un angle β prédéfini par rapport à la direction de défilement de bande d'au moins un autre premier convoyeur à bande.

5. Procédé selon l'une quelconque des revendications précédentes,
dans lequel le dispositif d'application (150) présente au moins un composant issu du groupe qui suit :
un dispositif de positionnement, au moyen duquel le dispositif d'application (150) peut être positionné de telle manière par rapport au support de fibres (140) que des angles différents α peuvent être réglés,
un dispositif d'avancement, au moyen duquel le dispositif d'application (150) est déplacé vers l'avant dans la direction d'application (120) au cours de l'application,
un dispositif d'aspiration, au moyen duquel une force d'aspiration fixant les structures de fibres 1D/2D (100) sur le dispositif d'application (150) est produite dans le dispositif d'application (150),
un dispositif de chauffage, au moyen duquel la surface, orientée en direction du support de fibres (140), de la structure de fibres 1D/2D (110) respectivement à appliquer est réchauffée à une température prédéfinie.

6. Procédé selon l'une quelconque des revendications 4 ou 5,
dans lequel est exécutée dans un ordre quelconque en supplément ou en variante au moins une des étapes de procédé qui suivent consistant à :
régler les forces d'adhérence respectives de telle manière que la force d'adhérence respective au niveau du dispositif d'application (150) est inférieure à la force d'adhérence respective au niveau du support de fibres (140),
baisser la force d'adhérence respective au niveau du dispositif d'application (150) au moment de l'application et/ou dans la zone d'application ;
augmenter la force d'adhérence respective au niveau du support de fibres (140) au moment de l'application et/ou dans la zone de l'application.

7. Procédé selon l'une quelconque des revendications 1 à 6,
dans lequel les structures de fibres 1D/2D (110) sont fixées les unes par rapport aux autres au moyen d'un dispositif de fixation (160) après et/ou au cours de l'application des structures de fibres 1D/2D (110) sur le support de fibres (140).

8. Procédé selon l'une quelconque des revendications 1 à 6,
dans lequel les structures de fibres 1D/2D (110) sont fixées sur le support de fibres (140) au moyen d'un dispositif de fixation (160) après et/ou au cours de l'application des structures de fibres 1D/2D (110) sur le support de fibres (140).

9. Procédé selon l'une quelconque des revendications 7 ou 8,
dans lequel le dispositif de fixation (160) présente au moins un composant issu du groupe qui suit :
une seconde moitié de moule comprenant un profil de surface complémentaire à la première moitié de moule, qui profile le matériau plastique composite renforcé de fibres pouvant être fabriqué avec le procédé ou le produit semi-fini en un matériau composite renforcé de fibres pouvant être fabriqué avec le procédé au cours d'une opération de consolidation,
un dispositif de pressage, à l'aide duquel les structures de fibres 1D/2D (110) appliquées sur le support de fibres (140) sont fixées les unes par rapport aux autres et/ou sur le support de fibres (140) par compression,
au moins un cylindre du dispositif de pressage, dans lequel la fixation des structures de fibres 1D/2D (110) appliquées sur le support de fibres (140) les unes par rapport aux autres est effectuée par compression entre l'au moins un cylindre et le support de fibres (140), dans lequel l'au moins un cylindre du dispositif d'application (150) peut être réalisé par la suite dans la direction d'application (120),
au moins deux cylindres du dispositif de pressage, dans lequel la fixation des structures de fibres 1D/2D (110) appliquées sur le support de fibres (140) les unes par rapport aux autres est effectuée par compression entre les deux cylindres,
un dispositif de chauffage, qui fixe les unes par rapport aux autres les structures de fibres 1D/2D (110) appliquées par réchauffement à une température prédéfinie,
un dispositif d'irradiation, qui fixe les unes par rapport aux autres les structures de fibres 1D/2D (110) appliquées par irradiation,
un dispositif de pulvérisation, qui fixe les unes par rapport aux autres les structures de fibres 1D/2D (110) appliquées en pulvérisant un liant ou un matériau de matrice.

10. Machine de production servant à fabriquer une structure de fibres 2D/3D (110) à partir de structures de fibres 1D/2D (110) à l'aide d'un procédé (100) selon l'une quelconque des revendications précédentes, comprenant un support de fibres (140) et un dispositif d'application (150), à l'aide duquel les structures de fibres 1D/2D (110) peuvent être appliquées dans une direction d'application (120) sur le support de fibres (140), dans laquelle la machine de production est réalisée pour que les diverses structures de fibres 1D/2D (110) appliquées par le dispositif d'application (150) sur le support de fibres (140) présentent au moins un ordre peu éloigné et qu'ainsi les structures de fibres 1D/2D (110) appliquées directement et à proximité plus immédiate soient appliquées les unes par rapport aux autres selon une règle ou régulièrement et les directions d'axe principal (130) des structures de fibres 1D/2D (110) appliquées forment par rapport à la direction d'application (120) un angle α > 0°, **caractérisée en ce que** le dispositif d'application (150) est réalisé sous la forme d'un convoyeur à bande (170), qui se déroule par sa surface sur le support de fibres (140) et applique dans ce cadre simultanément les structures de fibres 1D/2D (110) sans tension sur le support de fibres (140), et dans laquelle le convoyeur à bande (170) est réalisé de manière aspirée de sorte que les structures de fibres 1D/2D (110) sont fixées au moyen d'une force d'aspiration (190) au cours du transport sur le convoyeur à bande (170).
